Europäisches Patentamt

(19) European Patent Office

Office européen des brevets

(11) EP 1 339 550 B1

(12) EUROPEAN PATENT SPECIFICATION

(45) Date of publication and mention
of the grant of the patent:
**31.03.2004 Bulletin 2004/14**

(51) Int Cl.[7]: **B41M 5/36**, B41C 1/10,
B41M 5/26, G05D 23/19

(21) Application number: **01993546.9**

(22) Date of filing: **08.11.2001**

(86) International application number:
**PCT/EP2001/012944**

(87) International publication number:
**WO 2002/038386 (16.05.2002 Gazette 2002/20)**

(54) **A PROCESS AND AN APPARATUS FOR THE FORMATION OF PATTERNS IN FILMS USING TEMPERATURE GRADIENTS**

VERFAHREN UND VORRICHTUNG ZUR BILDUNG VON MUSTERN IN FILMEN UNTER VERWENDUNG VON TEMPERATURGRADIENTEN

PROCEDE ET DISPOSITIF DESTINES A LA FORMATION DE MOTIFS SUR DES FILMS A L'AIDE DE GRADIENTS DE TEMPERATURE

(84) Designated Contracting States:
**AT BE CH CY DE DK ES FI FR GB GR IE IT LI LU MC NL PT SE TR**

(30) Priority: **08.11.2000 EP 00124205**

(43) Date of publication of application:
**03.09.2003 Bulletin 2003/36**

(73) Proprietor: **Applied NanoSystems B.V.**
**9711 BC Groningen (NL)**

(72) Inventors:
- **SCHÄFFER, Erik**
  **NL-9784 PD Noordwolde (NL)**
- **STEINER, Ullrich**
  **NL-9711 ED Groningen (NL)**

(74) Representative: **Müller-Boré & Partner**
**Patentanwälte**
**Grafinger Strasse 2**
**81671 München (DE)**

(56) References cited:
**EP-A- 0 487 794** **US-A- 5 135 048**

- **PATENT ABSTRACTS OF JAPAN vol. 014, no. 361 (M-1006), 6 August 1990 (1990-08-06) & JP 02 128890 A (DAINIPPON PRINTING CO LTD), 17 May 1990 (1990-05-17) cited in the application**
- **CHEMICAL ABSTRACTS, vol. 85, no. 4, 26 July 1976 (1976-07-26) Columbus, Ohio, US; abstract no. 27333c, T.SHIGEO ET AL.: ""Thermographic recording sheet based on poly(carbon fluoride) and zeolite"" page 403; XP002165823 cited in the application & JP 50 136038 A (CANON K.K.) 28 October 1975 (1975-10-28)**
- **D.HANSEN ET AL.: "Method for studying polymer crystallization in a temperature-gradient field with controlled crystal growth" JOURNAL OF POLYMER SCIENCE, POLYMER PHYSICS EDITION., vol. 10, no. 8, August 1972 (1972-08), pages 1615-1619, XP002177376 JOHN WILEY AND SONS. NEW YORK., US ISSN: 0887-6266**

**EP 1 339 550 B1**

**Description**

The present invention relates to a process and an apparatus for producing patterns, particularly high-resolution patterns, in films, layers and/or interfaces which are exposed to temperature gradients. In particular, there is provided a process for producing lithographic three-dimensional structures by exposing at least one film, layer and/or interface on a substrate to a temperature gradient, the temperature gradient generating forces in the film which cause a mass transfer in the film to thereby produce a lithographic pattern.

In microelectronics, biotechnology and microsystems industries, it is important to produce high resolution patterns in substrates. For example, high resolution patterns are necessary to produce integrated circuits. Presently, photolithography is used to produce patterns on substrates. Photolithography techniques involve exposing a photoresist to an optical pattern and using chemicals to etch either the exposed or unexposed portions of the photoresist to produce the pattern on the substrate. The resolution of the pattern is thus limited by the wavelength of light used to produce the optical pattern. Since smaller wavelengths have to be used to produce sub-micron patterns, photolithography becomes increasingly complex and costly.

JP-A-02 128890 describes a pattern forming method wherein a metal mask is put fixedly on a transfer medium composed of a glass plate and a conductive silver paste having a glass frit as a pattern forming material is applied, in a dense direction of a dot pattern, onto this mask with a blade. Subsequently, a dot pattern for an silver electrode line is formed on the transfer medium by peeling the metal mask off from the transfer medium to be removed. The transfer pattern thus formed is dried and heat-treated by several temperature-time gradients.

D. Hansen et al. "Method for studying polymer crystallization in a temperature-gradient field with controlled crystal growth" published in the Journal of Polymer Science, volume 10, number 8, August 1972, pages 1615-1619, discloses sandwiching a layer of polymer between two metal plates. The temperatures of the metal plates are controlled by an embedded electrical resistance heater and cooling coils. Both plates are heated above the melting point of the polymer and, during cooling, a temperature difference is established between the plates; US-A-5 135 048 describes a similar apparatus for growing crystals, the only major difference being that metallic crystals are grown.

EP-A-0 487 794 describes a process for preparing resist patterns for lithography from a chemically amplified resist composed of a photoactive acid generator, including a step of controlling a photoactive acid catalyzed reaction, induced by the acid generator, adjacent to an area of the surface which is subjected to excess irradiation. The reaction control may be performed by trapping excess acid generated adjacent to areas of the resist surface, by forming a temperature gradient in the resist to restrict the photoactive reaction in selected areas, or by charging the resist in its thickness direction to move positive charge from the generated acid for establishing homogeneous charge distribution in the resist. The pattern is formed by removing parts of the light-exposed film using a chemical solvent.

Chemical Abstracts, Vol. 85, No. 4, July 26, 1976, Columbus, Ohio, US, Abstract No. 27333 C, T.Shigeo et al.: "Thermographic Recording Sheet based on poly(carbon fluoride) and Zeolite" discloses a thermographic recording sheet on the basis of poly(carbon fluoride) and zeolite. The image recording layers of the thermographic sheets contain $\geq 1$ inorganic C fluoride polymer and a molecular sieve zeolite as main ingredients. The method of producing such a thermographic recording sheet comprises dispersing a liquid acrylic resin and a fluorinated graphite in a isophorone-$C_6H_6$ (1:1) mixture, adding Ca zeolite X having adsorbed thereon about 10 wt.-% $NEt_3$ to the dispersion and coating the dispersion on a paper support, to give a white thermographic paper. Thus, a two-dimensional pattern in the thermographic recording sheet can be formed.

Accordingly, it is an object of the present invention to provide a process being capable of producing patterns, particularly high-resolution patterns, which is simple, efficient and suitable for low-cost patterning. Preferably, the process should allow patterning without the application of optical radiation to thereby avoid the above limitation by the wavelength of light used to produce such patterns. Further, such a process should not require the use of chemicals to etch or remove portions of the film. Moreover, it is a further object of the present invention to provide an apparatus for carrying out such a process.

This object is solved by a process as defined in claim 1 and by an apparatus as defined in claim 14. Preferred embodiments are subject of the dependent claims.

Hence, according to the invention, there is provided a process for producing a patterned film comprising the steps of

　　(a) providing a substrate having a substrate surface for supporting the film to be patterned,
　　(b) depositing at least one film containing a thermally conducting material onto the substrate surface, and
　　(c) exposing said at least one film at least partly to a temperature gradient, thereby generating forces in the film which cause a mass transfer in the film to thereby produce a three-dimensional pattern in the film.

The term "film" has to be understood to encompass all types of self-supporting or supported films and/or layers as well as interfaces between at least two films and/or layers. For example, the process is also applicable to pattern an interface defined by the contact surface of two adjacent films or layers. An essential feature of the invention is that patterning of the film is achieved by a transfer of mass within the film. In other words, the material undergoing patterning does not undergo any significant loss in mass so that, preferably, the patterning process is a mass conserving process (although solvents, if used, may be lost). Furthermore, according to the invention, the material of the film to be patterned does not need to undergo any change in its chemical properties.

Thus, the invention fundamentally differs from photolithographic techniques which are not mass conserving processes. Conventional photolithographic techniques used to form three-dimensional structures rely on the (chemical) removal of parts of the film which have been exposed (positive resist) or which have not been exposed (negative resist) by radiation.

The process according to the present invention includes several advantages. For example, patterns can be produced without optical radiation. In principle, the lateral resolution of the pattern can be made arbitrarily small by controlling the applied temperature gradient and selecting a film with appropriate properties. Furthermore, high-resolution patterns, e.g. lithographic structures, can be obtained by the process according to the present invention without requiring the use of chemicals to etch or remove portions of the film.

In a preferred embodiment, the temperature gradient is generated by bringing the substrate surface and at least one mounting surface provided opposite to the substrate surface into thermal contact with at least first and second temperature control means set at different temperatures. The spacing between the substrate surface and the mounting surface is preferably within the range of 10 nm to 5000 nm, more preferably 50 nm to 1000 nm, even more preferably 150 nm to 600 nm. The mounting surface, also referred to as the top plate, may be patterned to have, for example, a plurality of depressions and projections or some other topographic features. Thus, as the temperature of the mounting surface can be controlled by the second temperature control means, the topographic features formed in the mounting surface result in varying distances between the substrate surface and the mounting surface which yields a laterally varying temperature gradient between the substrate and mounting surfaces. More than one mounting surface or top plate can be provided to generate spatially complex temperature gradients. The substrate and mounting surfaces do not need to be planar surfaces but can have any desired shape. Moreover, the mounting surface does not need to be parallel to the substrate surface.

In order to structure large film areas, a roller / stamping plate can be employed. In this respect, it is to be noted that typical techniques for structuring large areas include, in each case with or without a surface texture, where the film materials is run past these and comes into contact with at least part of the surface: the use of rollers such as in traditional newspaper printing presses and film embossing lines: stamping plates, similar to plates used to make engravings or to print wallpapers: and continuous steel belt processes, similar to those used to make cast polymer or glass films.

The process for producing a patterned film according to the invention fundamentally differs from embossing techniques as for example described in JP-A-02 128890 cited previously. According to this conventional embossing process, a paste is mechanically pressed into dots formed in a mask in order to produce the desired pattern. Contrary to this, a process according to the invention generates forces in the film to be structured by applying a temperature gradient across the film. These forces induce a transfer of mass in the film to thereby produce the pattern. The process according to the invention makes a positive copy (raised areas being raised areas in mirror-reflection) of the mounting surface (the patterned mask or top plate), rather than a negative copy (raised areas corresponding to depressions) as in JP-A-02 128890.

Further, in contrast to all embossing techniques, the mounting surface (top plate) does not need to be in mechanical contact with the film, layer or interface being patterned. If a film is patterned by an embossing technique, material of the film is mechanically pushed aside by an embossing tool. Contrary to this, the invention proposes the transferal of mass in the film by forces generated by the temperature gradient applied across the film. If the process according to the invention is selected so that the film contacts the mounting surface, this contact will only be made between a top surface of the film and the mounting surface (mask surface), thus making mask removal easier.

The process according to the invention differs from printing techniques in particular in that the material to be patterned is applied to the substrate first and then patterned, rather than vice versa. Further, a physical contact to the material being patterned may not be required. Indeed, the absence of physical contacts is often desirable to avoid problems with mask / image separation.

The temperature gradient to which the at least one film is exposed, is within the range of $10^6$ °C/m to $10^{10}$ °C/m, more preferably $10^7$ °C/m to $10^9$ °C/m.

The film can be present in a liquid or a solid state. A second film contacting the film, layer or interface to be patterned can be provided. In this case, the contact surface of the two films, i.e. the interface of the two adjacent films, will be patterned and, preferably, the texture will be generated in a liquid-liquid interface. After completion of the patterning process, the second film or layer can be removed, e.g. by a chemical solvent, to expose the patterned surface of the first film. Such a patterning in a liquid-liquid interface system allows more patterning possibilities than a liquid-gas interface.

The deposition of the at least one film in step (b) can be carried out by the conventionally known techniques like spin coating, spraying, immersing, etc.. Preferably, the film is liquid after its deposition onto the substrate surface. If the film is not liquid after its deposition onto the substrate surface, the film can be liquefied before and/or during exposition to a temperature gradient in step (c) of the process according to the present invention. The liquefaction can be performed by e.g. heating or treating with a solvent or in a solvent atmosphere. After step (c) according to the process of the present invention, the film can then be solidified, for example, by cooling, a chemical reaction, a cross-linking process, a polymerization reaction, or by using a sol-gel process.

The film to be patterned can be of a single layer or can include a plurality of layers, i.e. two or more iterations. The layers can be gaseous, fluid or solid in character. The gaseous materials can be at normal, elevated or reduced pressures. The thermally conducting material which is contained in the at least one film to be patterned, is preferably an organic polymer or an organic oligomer. The molecular weight of the organic polymer or organic oligomer used is not subject to any particular limitation. For example, polymers having a molecular weight of approximately 100 g/mol can be used. As preferred examples of the organic polymer usable in course of the process according to the present invention, polystyrene, partially or fully chlorinated or brominated polystyrene, polyacrylates and polymethacrylates can be exemplified.

When the film contains an organic polymer, it is particularly preferred to keep the film during the operation of step (c) of the process according to the present invention above the glass transition temperature of the organic polymer used.

The substrate can include a single layer or a plurality of layers. The substrate surface can be a surface of a solid or liquid material. Preferably, the substrate surface is a planar and unpatterned surface. However, the invention is also applicable to non-planar substrates. Preferably, the substrate can be a semiconductor wafer, more preferably a silicon wafer. Such a semiconductor wafer can also be coated with a precious metal layer like e.g. a gold layer. Preferably, the film thickness is within the range of 10 nm to 1000 nm, more preferably 50 nm to 250 nm.

The pattern obtained by the process according to the present invention can be further specified by spatially controlling the temperature gradient. The pattern can be even further specified by spatially varying the surface energy of one of the substrate surface and the mounting surface. In order to support the patterning process driven by the applied temperature gradient, additional (supporting) effects can be employed. In particular, electrical effects like constant and/or time-varying electric fields and/or electromagnetic waves of any frequency can be used to promote the patterning process. Furthermore, also additional mechanical effects like bulk and surface acoustic waves, vibrations, mechanical forces, pressure and/or evaporation effects can be considered to improve the patterning process. Any of these effects can be applied with variations in spatial geometries and temporal factors, including field reversal.

The process according to the present invention can form a patterned film with lateral features smaller than 10 μm, particularly smaller than 1 μm, more particularly smaller than 100 nm. The resolution of the pattern depends on the magnitude of the temperature gradient, the thickness of the film, the surface tension of the film material, the difference of the velocity of sound of the film material and the substrate, the thermal conductivities of the film material and the adjacent medium and the difference in density between the film material and the adjacent medium such as for example air. For example, the velocity of sound (at an acoustic wavelength of approximately 1 μm) of polystyrene is 1250 m/s, of polymethylmethacrylate 2150 m/s and of silicon used as substrate 8400 m/s, respectively; the thermal conductivity of polystyrene is 0.16 W/mK, of polymethylmethacrylate 0.20 W/mK and of air 0.034 W/mK; the density of polystyrene is 0.987 g/m$^3$, of polymethylmethacrylate 1.116 g/m$^3$ and of silicon used as substrate is 2.33 g/m$^3$; and the surface tension of polystyrene is 0.03 N/m.

If desired, the pattern on the film can be transferred to another substrate using conventionally known etching techniques, e.g. reactive ion or chemical etching procedures. Alternatively, the patterned film itself can be used in subsequent applications, such as in a device, e.g. a diode, a transistor, a display device, or a chemical, biological, medical or mechanical sensor or part thereof.

According to a preferred embodiment, the substrate surface and/or the mounting surface are moved relatively to each other during at least a time fraction of the process time. Specifically, the substrate surface and/or the mounting surface can be moved during the shaping (patterning), cooling and/or post-roll stages of the process. Preferably, the substrate surface and/or mounting surface are moved relatively to each other during a fraction of time the film is exposed to the temperature gradient and the material of the film (e.g. the polymer) is liquefied. This allows the formation of for example angular textures relative to the substrate surface, which can be important e.g. for the extinction of iridescence effects for signalling applications.

According to the present invention, there is further provided an apparatus for producing a patterned film, the apparatus comprising a substrate having a substrate surface for supporting the film to be patterned; a temperature gradient generator for generating a temperature gradient in a temperature gradient volume, the temperature gradient having a component orientated along a normal direction of the substrate surface, wherein the temperature gradient volume includes at least a volume portion extending from at least an area of the substrate surface in the normal direction thereof. In order to avoid unnecessary repetitions of descriptions of preferred embodiments/features, it is to be noted that features previously described in conjunction with the process according to the invention can also be employed in an apparatus according to the invention.

The substrate is preferably a planar and unpatterned substrate, e.g. a semiconductor wafer or a glass plate. However, also non-planar and structured substrates can be employed.

In a preferred embodiment, the temperature gradient generator comprises at least first and second temperature control means, the temperature control means being spaced apart from each other, so that the substrate is operationally disposed at least partly therebetween and the temperature gradient volume is defined at least partly therebetween. In a more preferred embodiment, at least one mounting surface is provided opposite to the substrate surface, the first temperature control means being connected to the substrate, while the second temperature control means being connected to the mounting surface. The spacing between the substrate surface and the mounting surface can preferably be within the range of 10 nm to 5000 nm, more preferably 50 nm to 1000 nm, even more preferably 150 nm to 600 nm.

The temperature control means is controlled to generate a temperature gradient between the substrate surface and the mounting surface opposite to the substrate surface within the range of $10^6$ °C/m to $10^{10}$ °C/m, more preferably $10^7$ °C/m to $10^9$ °C/m. There are no limitations concerning the geometrical design of the mounting surface. Preferably, the mounting surface provided opposite to the substrate surface can be, for example, designed in form of a plate (top plate). However, the mounting surface can also be non-planar surface. In particular, the mounting surface can be a patterned surface having a plurality of projections and depressions.

The temperature gradient generator can be adapted to generate at least partly homogenous and/or at least partly heterogeneous temperature gradients, in particular temperature gradients varying laterally over the substrate surface.

In another embodiment according to the present invention, at least one of the substrate surface and/or the mounting surface is patterned with topographic features and/or has a spatially varying surface energy and/or a spatially varying thermal conductivity.

The film to be patterned and the mounting surface provided opposite thereto can be separated by e.g. an air gap, i.e. the spacing between the substrate surface and the mounting surface can be filled with e.g. air. Alternatively, the film and the mounting surface can be separated by any gaseous, liquid or solid material. For example, a double layer system of two solid materials can be used, one of the layers acting as the film to be patterned while the upper one superposed thereon serving as adjacent medium. When heated, both of the layers become liquid, while both of the layers, in turn, become solid, when cooled down. As a result, a structure or pattern, respectively, of one material in the other material is obtained.

To increase the phonon reflection as explained later hereinbelow, it can be appropriate to provide thin gold layers having a thickness in the range of e.g. 1 nm to 100 nm on both surfaces (interfaces) of the first layer acting as the film to be patterned, so that the phonons propagating in the first layer of the double layer system of two solid materials are reflected much better at the first layer/second layer interface. The gold layers can be deposited onto the substrate surface and then on the film surface in that order. Alternatively, at first, the first layer of the double layer system acting as the film to be patterned can be sandwiched between both gold layers and this assembly can then be applied on the substrate surface, before applying the second layer of the double layer system on the upper gold layer of said assembly. In turn, the second layer of the double layer system can be applied on said assembly, before applying said assembly on the substrate surface. Such a process using a double layer system is of interest for applications like the semiconductor industry, photo-voltaic applications or for the preparation of photodiodes. After said procedure, one of the two solid material can also be removed by e.g. etching or dissolving to obtain a lithographic mask.

The separation distance, i.e. the spacing, can be varied while applying the temperature gradient. In addition, the aspect ratio of the patterned film can be significantly greater than that of the (patterned) mounting surface (the patterned top plate). To increase the aspect ratio, the spacing between the mounting surface and the substrate surface can be increased while the film is liquefied and the temperature gradient is applied. If necessary, the temperature gradient can be varied during the relative displacement of the substrate and the mounting surface. In a further embodiment, the substrate and the mounting surface can be moved in a direction parallel to the mounting surface or the substrate surface, while the film is liquefied and the temperature gradient is applied, to obtain a patterned film that is deformed in one or two lateral directions.

As mentioned above, the temperature gradient can be obtained by setting the substrate surface and the mounting surface at two different temperatures controlled by the first and second temperature means. The temperatures control means can be, for example, temperature baths, heating devices or cooling devices or other conventional temperature devices known in the art. Alternatively, at least one of the substrate surface and/or the mounting surface can be exposed of radiation from a radiation source, i.e. radiation from a radiation source heats the back side of at least one of the substrate surface and/or the mounting surface. The radiation source can be, for example, a laser, an infrared lamp, or any other intensive radiation source. The radiation source can be operated in a constant mode, i.e. the radiation source is switched on for a longer time period of the patterning process, so that a thermal equilibrium, i.e. a constant temperature gradient, is reached. Otherwise, the radiation source can be operated in a pulsed mode, so that a temperature gradient is set up only for a short time to reach, for example, a temperature difference between the substrate surface and the mounting surface, of 1000°C or more, thereby immediately destabilizing the film to be patterned. The latter procedure is particularly advantageous when using film materials having a high melting point such as, for example, metals and alloys.

The apparatus according to the present invention can be heated or cooled during operation.

The above processes and apparatuses according to the invention can be used in a multitude of possible applications in the general category of nanoscale structures such as multilayered structures and the patterning of active materials as well as 'inert' substrates. The materials to be patterned can be inert materials e.g., chemically inert, e.g., where they are chemically resistant materials forming the channels and wells through which chemicals will flow in e. g., a biochip device: or e.g., electrically inert i.e., insulators in microelectronic circuits: or they can be active materials e.g., chemically and/or magnetically and/or optically and/or electrically active, e.g., the 'electron carrier' and 'hole carrier' organic materials used as the two components of the light-absorbing current-generating structures of an organic photovoltaic cell.

In particular, the present invention could be advantageously employed in the following technical fields:

- Microelectronics, microoptoelectronics, microelectromechanical systems (MEMS), and microoptoelectromechanical systems (MOEMS).
- Biochips, in particular the patterning of substrate and other materials, e.g. nutrient gels.
- Polymer photonic devices (esp. photovoltaic cells, polymer photodiodes, band-gap materials, optoelectronics, electroluminescent materials), especially forming materials with large refractive index differences and forming the vertically patterned interface for polymer-polymer photovoltaic materials and photodiodes. Further, stress by self-organization or by field-assist or plate(s) pattern-assisted patterning could be considered.
- Antireflection features / coatings, in particular 'gradated refractive index effects' and 'light maze' effects and the ability to make undercut structures.
- Iridescent / interference structures having easy release properties: Highly iridescent structures require light beams to interfere constructively after reflection from multiple thin plates, where these plates, and their separations, are highly periodic and (for visible light effects) in the nanoscale region, but the length (or depth) of such plates, to allow multiple interactions from at least some viewpoints, has to be typically an order of magnitude or preferably more greater. Making such structures (also termed 'highly blazed gratings') has not been shown using conventional materials forming techniques such as embossing because the combination of the very fine horizontal scale of the pattern and the comparatively large vertical depth of the structures needed make mould release from the very high surface area, and its very high component in the (vertical) mould release direction, extremely difficult without causing damage to either or both mould and grating. The technique proposed by this invention, offering possibilities to make such structures at such scales where only a small portion of the surface (if, indeed, this) is in contact with the mould bypasses this difficulty and allows such structures to be made with ease.
- Polarization / polarization rotation structures, in particular multilayered structures using different materials including diazo.
- Antiwetting surfaces and surface energy / surface tension alterations e.g., by microwells (lotus leaves): It has recently been demonstrated that a combination of chemical features, e.g., use of hydrophilic materials (for surfaces to be anti-wetted or cleaned by water droplets) and nanostructures such as pits, mounds and ridges of particular size on the surface, which allow air to be trapped and which hold dirt particles away from the majority of the surface, is important in making anti-wettable and so-called 'self cleaning' surfaces: the effect has been noted in nature, in the petals of the sacred lotus leaf, by Professor Barthlott and co-workers at the University of Bonn (see *Planta*, 1997, vol 202 p1-8). The process according to the invention is ideally suited to create the patterning in such surfaces.
- Enhanced catalytic activity surfaces.
- Data storage
- Vertical transmission of signals e.g., optical - fibre bundle effect: The use of fibre optic bundles to transmit signals is well known: what is less appreciated is that a coherent bundle can display an image at its further end. Such a transmission, either of plain signals or full image, is seen in slabs cut perpendicular to the fibres of natural highly coherent asbestos replacement materials such as ulexite, which consists of a coherent fibre bundle: the effect has also been shown artificial in glass by Fiox Limited. The present invention offers a way to make a fibre bundle, which would moreover be a coherent fibre bundle, with optical transmission vertical to the plane of the film being patterned.

In the following, the invention will be exemplified by preferred embodiments shown in accompanying drawings. In the figures:

Fig. 1 shows a schematical drawing of a preferred embodiment of the apparatus for producing the patterned films according to the present invention;

Figs 2a-c schematically show a columnar structure having well-defined column diameters and inter-column spacings as developed in accordance with the process of the present invention;

Figs 3a-c schematically show a columnar structure as developed in accordance with the process of the present invention, thereby using a top plate which is topographically patterned;

Figs 4a-c schematically show a columnar structure as developed in accordance with the process of the present invention, thereby using a substrate which has a lateral variation in its surface energy;

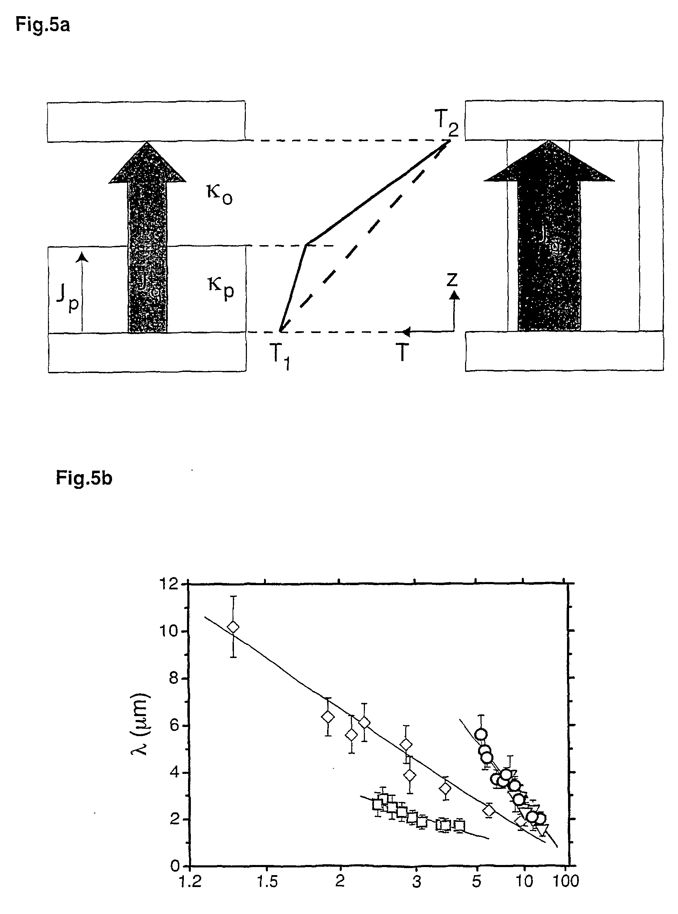

Fig. 5a shows a schematic representation of the theoretical model underlying the process according to the present invention, with $J_q$ representing a heat flux and $J_{ph}$ representing a phonon flux; Fig. 5b is a graph showing the experimentally determined instability wavelength $\lambda$ compared to the theoretical predictions, wherein the diamonds, triangles and circles correspond to polystyrene films with $h$ = 96 nm, $\Delta T$ = 11 °C; $h$ = 80 nm, $\Delta T$ = 43 °C, and h=100nm, $\Delta T$ = 46 °C, respectively, while the squares represent a 92 nm thick polystyrene film which was spin-coated onto a gold (100 nm) covered silicon substrate ($\Delta T$ = 37 °C), the solid lines being theoretical predictions;

Figs. 6a-6c show optical micrographs of polystyrene (PS) films obtained after exposition to a temperature gradient, when applying a homogeneous field as carried out in the examples hereinbelow; and

Figs. 7a-7c show optical micrographs of polystyrene (PS) films obtained after exposition to a temperature gradient, when applying a heterogeneous field as carried out in the examples hereinbelow.

Other features and advantages of the invention will be apparent from the following.

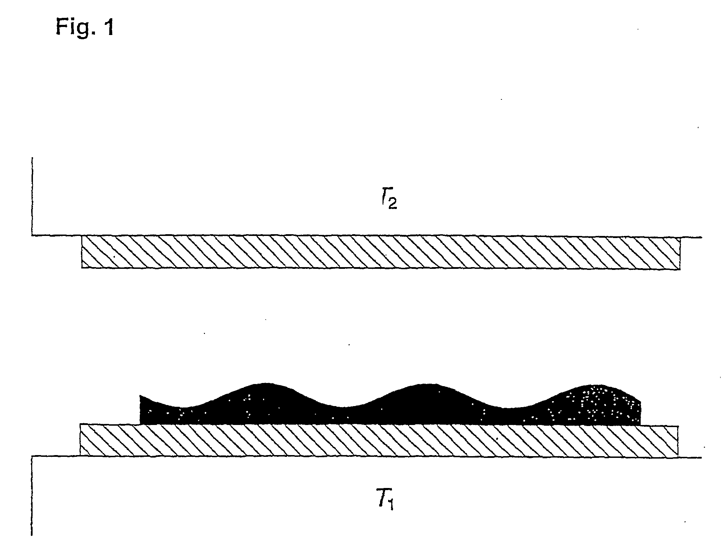

A preferred embodiment of the apparatus for producing the patterned films according to the present invention is shown in Fig. 1a. A film is formed on a substrate, opposed by a mounting surface in form of a plate (top plate). In this specific embodiment, the film is a polymer film, but, alternatively, the film can be any liquid or solid material. The substrate and the mounting surface are brought into thermal contact with first and second temperature control means which during operation produce a temperature gradient between the substrate surface and the mounting surface designed in form of a top plate. A particular medium is present between the film and the mounting surface, which has a thermal conductivity, density or velocity of sound that is different from the film material. For example, this medium can be vacuum, air, or any other liquid or solid material. As explained below in greater detail, the temperature gradient causes the film to form a pattern. Preferably, the film can contain an organic polymer or an organic oligomer. For example, the film can contain a glassy polymer (e.g. polystyrene), which has been spin-coated onto the substrate. Preferably, the film is liquefied before and/or during subjecting to the temperature gradient. For example, when the film is a glassy or semi-crystalline polymer, it may be solid at room temperature and turn liquid upon heating.

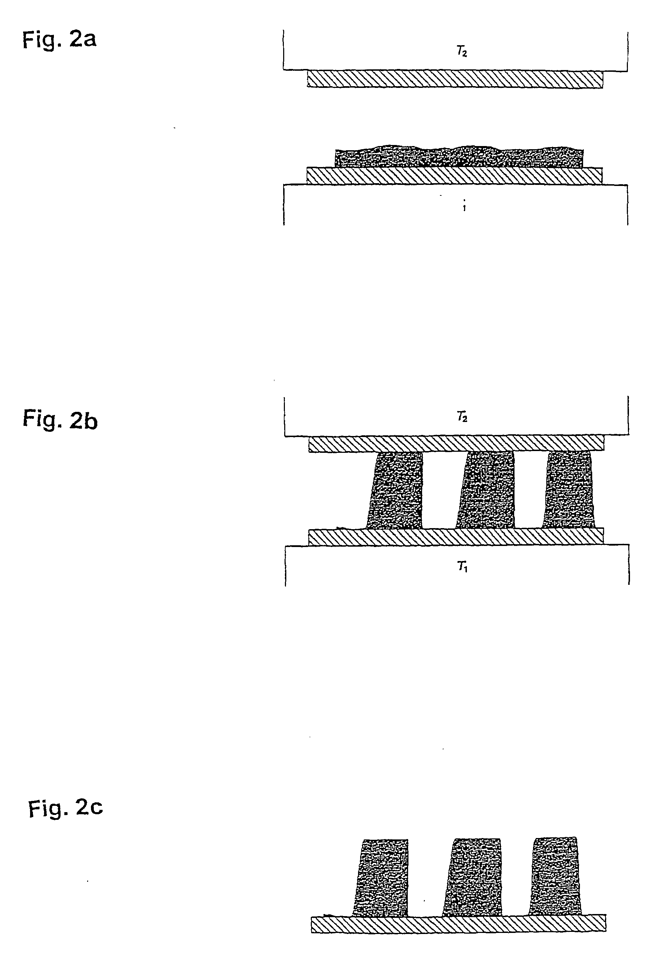

When two different temperatures are applied to the substrate surface and the mounting surface, the resulting temperature gradient between the substrate surface and the mounting surface will induce a thermomechanical pressure at the interface between the film and the spacing between the substrate surface and the mounting surface, which will ultimately destabilize the film and dominate over competing forces. The film develops a surface undulation with a well-defined wavelength as shown in Fig. 2a. With time, the amplitudes of these waves increase until the film touches the mounting surface (top plate) as shown in Fig. 2b, thereby producing a columnar structure having well-defined column diameters and inter-column spacings. By solidifying the film material, e.g. by cooling, the structure is preserved as shown in Fig. 2c. The column diameters and spacings, respectively, depend on parameters like the temperature difference, the thickness of the film, the thermal conductivities of the film material and the adjacent medium, the densities of the film material and the adjacent medium, and the velocity of sound of the film material and the substrate material.

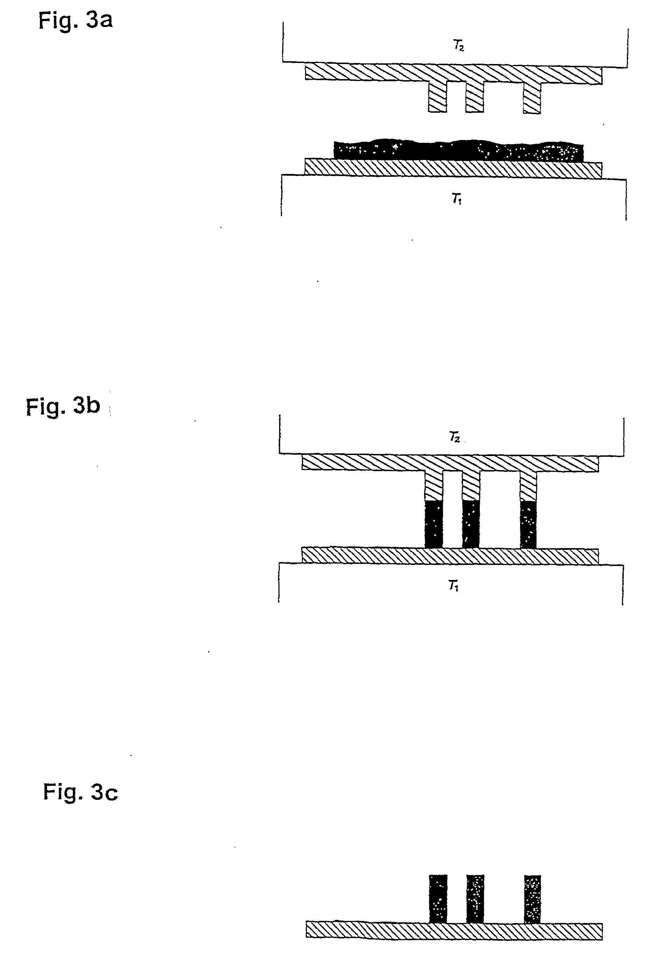

The embodiment described in Figs. 2a-2c corresponds to a laterally homogeneous externally applied temperature difference. In a laterally heterogeneous temperature field, the thermomechanically induced instability of the film is additionally modified by the lateral temperature gradients. This effect can be used to replicate a master pattern to a lateral structure in the film. To this end, the substrate surface, the mounting surface or both can feature a lateral pattern, i.e. the substrate surface can also be patterned, either in the alternative, or in addition, to the mounting surface. Such patterns can be produced, for example, by electron beam etching. Such an embodiment is shown in Fig. 3a, wherein the mounting surface is replaced with a top plate which is topographically patterned. In this case, the externally applied temperature difference causes the film undulations to focus in the direction of the strongest temperature gradient. As a result, the film forms a pattern corresponding to the topographically patterned top plate, as shown in Fig. 3b. Upon solidifying the film, the structure in the film is retained, as shown in Fig. 3c. In addition, the aspect ratio of the patterned film can be significantly greater than that of the patterned plate. To increase the aspect ratio, the spacing between the mounting surface and the substrate surface can be increased, while the film is liquefied and the temperature difference is applied. If necessary, the applied temperatures can be varied during the relative displacement of the mounting surface and the substrate surface.

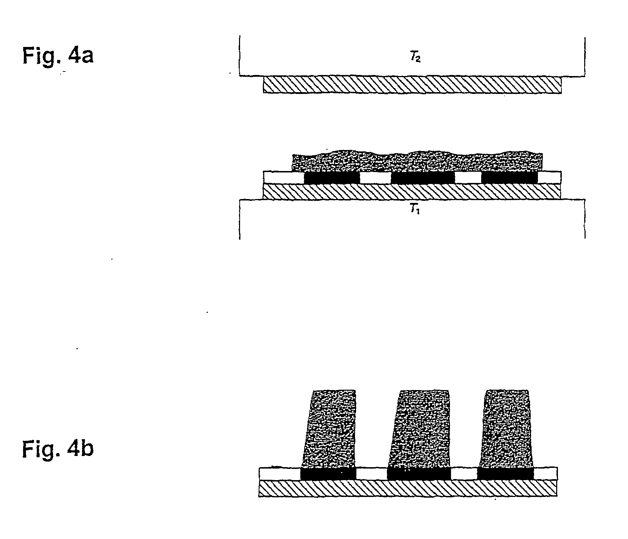

In a further embodiment as shown in Fig. 4a, the substrate is replaced with a substrate which has a lateral variation in its surface energy. The lateral variation in the surface energy can be produced, for example, by micro-contact printing. Thereafter, a film is deposited onto the substrate. As in the other embodiments, the film can be liquefied and a temperature difference is then applied to the substrate and the top plate. The temperature gradient results in an instability of the film as described above. The developing surface undulations align with respect to the surface energy pattern of the substrate. As shown in Fig. 4b, the structure in the film thus obtained is then preserved by solidifying the polymer. Alternatively, in other embodiments, the mounting surface can have a lateral variation in surface energy, either in the alternative, or in addition, to the substrate surface. Further, the thermal conductivities of either the substrate surface and/or the mounting surface can spatially vary. Moreover, it is also possible to have a lateral variation in the surface energy of the substrate surface or the mounting surface or both, and a topographical pattern on the substrate surface or the mounting surface or both.

Although not meant to limit the invention in any way, theoretically, the origin of the film instability can be understood when considering the balance of forces which act at a polymer-air-interface (cf. Fig. 5a). The surface tension $\gamma$ minimizes the polymer-air- surface area and stabilizes the homogeneous polymer film. The temperature gradient causes a flux of thermal energy $J_q$ in the polymer film and the air gap. Associated with the flow $J_q$ is a flux of thermal excitations, so-called phonons ($J_{ph}$), towards lower temperatures as shown in Fig. 5a. Due to the different acoustic impedances of the two layers, a part of the spectrum of the phonons propagating in the polymer film are nearly perfectly reflected at the liquid-air interface. The reflections of the phonons at the film surface gives rise to a radiation pressure. This radiation pressure may be additionally amplified by multiple reflections at the film-air and film-substrate interfaces. The radiation pressure $p_r$ is opposed by the Laplace pressure which stems from the surface tension. A local perturbation in the film thickness $h$ results in a pressure gradient which drives a flow of the liquid in the plane of the film. The liquid flow next to a solid surface is given by a Poiseuille type formula, which, together with a mass conservation equation, establishes a differential equation describing the temporal response of the liquid. A common approach to investigate the effect of external forces on a liquid film is the linear stability analysis. A small sinusoidal perturbation is applied to an otherwise flat film and its response is calculated with the help of a linearized version of the differential equation. The resulting dispersion relation quantifies the decay or amplification of a given perturbation wavelength with time. The fastest amplified mode is given by:

$$\lambda_m = 2\sqrt{\frac{2\gamma}{\left(\dfrac{\partial p_r}{\partial h}\right)}} \tag{1}$$

$\lambda_m$ is the wavelength of the mode and corresponds to the resolution of the formed pattern, $p_r$ is a function of the temperature gradient, the thermal conductivity of the polymer, and the velocities of sound of the polymer and the substrate. $h$ is the thickness of the film. The lines in Fig. 5b show $\lambda_m$ as a function of the heat flux $J_q$ for four different parameter sets. The symbols are the results of experiments. A similar equation quantifies the characteristic time $\tau_m$ for the formation of the instability. The experimental data shown in Fig. 5b will be described further hereinbelow.

The expression for $\lambda_m$ can further be expressed as:

$$\lambda = 2\pi\sqrt{\frac{\gamma u_p \Delta T}{Q}\frac{k_0 k_p}{(k_p - k_0)}\frac{1}{J_q}} \tag{2}$$

$k_0$ and $k_p$ are the thermal conductivities of air and polymer, respectively, $\Delta T$ is the temperature difference which is applied between the substrate surface and the mounting surface opposite to the substrate surface, $\gamma$ is the polymer air surface tension, $u_p$ is the velocity of sound in the polymer, and $Q$ is a quality factor, which accounts for the details of the phonon reflection.. The film thickness is $h$ and the spacing between the substrate surface and the mounting surface opposite of the substrate surface is $d$.

In general, the equation indicates that no features are formed without the presence of a temperature difference $\Delta T$. It also indicates that the resolution of the pattern is arbitrarily small because, in principle, $d$, $h$, and $\Delta T$ can be

arbitrarily controlled. For example, heat isolating spacers can be used to precisely control the spacing d. The temperature gradient at least partly exceeds $10^6$ °C/m, more preferably $10^7$ °C/m. The temperature gradient lies within the range of $10^6$ °C/m to $10^{10}$ °C/m, more preferably $10^7$ °C/m to $10^9$ °C/m.

While the topography of the film occurs spontaneously, control of the lateral structure is achieved by laterally varying the mounting surface by e.g. spatially varying the surface energy, by spatially varying the thermal conductivity of the mounting surface such as for example by patterning the top plate with topographic features, or by spatially varying the thermal conductivities of either the substrate surface and/or the mounting surface. In a preferred embodiment of the present invention, the mounting surface provided opposite to the substrate surface is designed as a (top) plate. In a more preferred embodiment, the top plate can be replaced by a topographically patterned master (cf. Fig. 3a-3c). Because the thermomechanical forces are strongest for smallest spacings d, the time for the instability to form is much shorter for smaller values of d. As a consequence, the emerging structure in the film is focused towards the mounting surface (top plate) structure. This leads to a replication of the master.

In general, the present invention exploits the use of thermomechanical forces to act on a boundary of different thermal conductivities. If the spacing between the substrate surface and the mounting surface provided opposite to the substrate surface is chosen small enough, particularly < 1 µm, small temperature differences $\Delta T$ in the range of 10 °C to 100 °C, particularly 20°C to 40°C, more particularly approximately 30 °C, are sufficient to generate high temperature gradients in the film. This results in strong pressures which act on the film surface (~10 kN/m$^2$). These forces cause the break-up of the film. For laterally homogeneous temperatures, the film instability features a characteristic wavelength which is a function of the temperature gradient and the difference in thermal conductivities of the film and the particular medium filling the spacing d, i.e. for example the air gap. It can be well described by a linear stability analysis. If the substrate surface or the mounting surface provided opposite to the substrate surface is replaced by a patterned master, the structure is replicated by the film. As described in the experimental results below, the lateral length can scale down to 500 nm. Advantageously, by the present invention, the extension to lateral length scales of less than 100 nm and aspect ratios greater than 1 are achievable.

The present invention will now be illustrated by way of the following examples.

Homogeneous Fields

A thin polymer film of polystyrene (PS) having a thickness $h$ was spin-coated from a solution onto a highly polished silicon wafer serving as a substrate. Subsequently, a mounting surface was provided opposite to the substrate by mounting another silicon wafer as an opposing top plate at a distance $d$ (spacing $d$) leaving a thin air gap. This assembly was placed on a hot plate set at 170 °C and a cooled copper block whose temperature was maintained at 127 °C, was put on top of the assembly, establishing a temperature difference $\Delta T$ = 43 °C. Both temperatures were above the glass transition temperature of the used polymer ($T_g$). To assure the air gap, the top plate had a small step. Using a wedge geometry, values of d ranging from 150 nm to 600 nm were achieved this way. The temperature difference $\Delta T$ and the geometry of the assembly determine the temperature gradient in the polymer film. The thermomechanical driving force scales with the temperature gradient. It increases with decreasing values of $d$ and increasing polymer thicknesses $h$. The temperature difference combined with the small distance between the substrate and the top plate ($d$ < 1 µm) leads to high temperature gradients (~ $10^8$ °C/m). After an annealing time of a few hours, the polymer is immobilized by quenching below $T_g$, the mounting surface is mechanically removed, and the morphology of the polymer film was investigated by optical and atomic force microscopy (AFM).

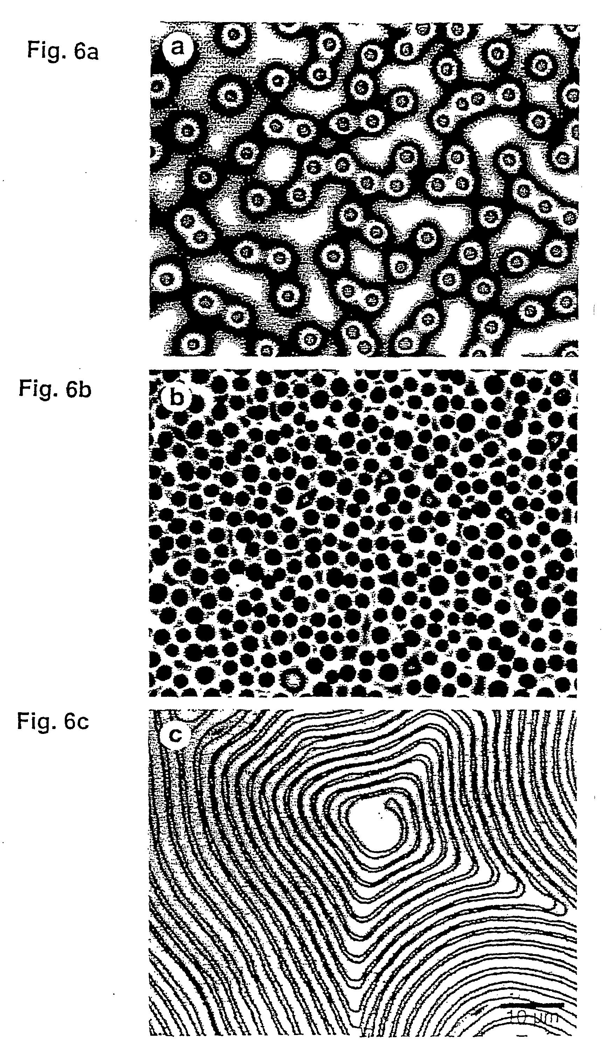

The results of the experiment are shown in Fig. 6a-6c, which are optical micrographs of polystyrene (PS) films that were exposed to a temperature gradient. In Figs. 6a and 6b, a 100 nm thick PS film was annealed for 18 h, during which the substrate and the mounting surface were kept at 170 °C and 124 °C, respectively, corresponding to $\Delta T$ = 46 °C. In Fig. 6a the spacing $d$ was = 345 nm, while in Fig. 6b the spacing was $d$ = 285 nm. Figs. 6a and 6b correspond to the early and late stages of the instability, respectively. In addition to columnar structures, stripe like morphologies are also observed as shown in Fig. 6c, for a 110 nm thick PS film with a spacing of $d$ = 170 nm and a temperature difference $\Delta T$ = 54 °C.

The morphology in all three images exhibit well-defined lateral length scale. The wavelength $\lambda$ is a function of temperature gradient, which varies inversely with the spacing d between the substrate surface and the mounting surface. The lateral structure dimensions as well as the plateau height is readily measured with the atomic force microscope yielding $\lambda$ as a function of the heat flux $J_q$. The morphologies in Figs. 6 exhibit a stochastic distribution and no order. In Fig. 5b, $\lambda$ is plotted as a function of $J_q$ for four polystyrene samples with $h$ = 96 nm and $\Delta T$ = 11 °C, $h$ = 80 nm and $\Delta T$ = 43 °C, and h = 100 nm and $\Delta T$ = 46 °C, and $h$ = 92 nm and $\Delta T$ = 37 °C for the diamonds, triangles, circles, and squares, respectively. The lines correspond to the predictions of Eq. (2), with no adjustable parameters. For the samples which are represented by the squares, the silicon wafer used as substrate was coated with a 200 nm thick gold film before the deposition of the polymer film. This leads to an increase in the Q factor in Eq. (2) and, in turn, to lower values of $\lambda$ compared to the diamonds, circles and triangles. For a given film thickness $h$, the characteristic lateral structure size scales inversely with the heat flux $J_q$.

Heterogeneous Fields

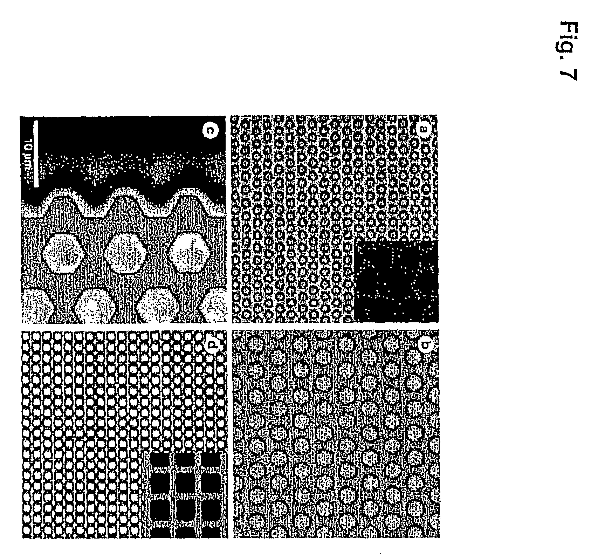

Patterned mounting surfaces in form of patterned top plates were mounted facing a polystyrene film ($h$ = 106 nm). Then, the film was exposed to a temperature difference of $\Delta T$ = 37 °C, followed by an annealing time of 20 h. To ensure that no polymer remains on the master after disassembly, the top plate can be rendered nonpolar by e.g. depositing a self-assembled alkane monolayer. Fig. 7a-c show optical microscopy images that show arrays of hexagons with periodicities of 2 mm (Fig. 7a), 4 mm (Fig. 7b), and 10 mm (Fig. 7c), which replicate the silicon master patterns. The spacing $d$ was 160 nm in Fig. 7a, 214 nm in Fig. 7b, 220 nm in Fig. 7c and 155 nm in Fig. 7d, respectively. The inset in Fig. 7a shows a higher magnification atomic force microscopy image of Fig. 7a. In Fig. 7d, the top plate was heated to a higher temperature (T = 189 °C) than the substrate (T = 171 °C), which was covered by a 65 nm thick polystyrene film. The cross-hatched pattern consists of 500 nm wide and 155 nm high lines. The inset is a higher magnification atomic force microscopy image. The high quality of the replication extended over the entire 100 x 100 mm$^2$ area that was covered by the master pattern for all 4 images.

**Claims**

1.  A method of producing a patterned film comprising the steps of

    (a) providing a substrate having a substrate surface for supporting the film to be patterned,
    (b) depositing at least one film containing a thermally conducting material onto the film supporting surface, and
    (c) exposing said at least one film at least parity to a temperature gradient within the range of 10$^6$ °C/m to 10$^{10}$ °C/m in such a way so as to generate forces in the film which cause a mass transfer in the film in order to thereby produce a three-dimensional pattern in the film,

2.  The method according to claim 1, wherein the temperature gradient is generated by bringing the substrate surface and at least one mounting surface provided opposite to the substrate surface into thermal contact with at least first and second temperature control means set at different temperatures.

3.  The method according to claim 1 or 2, wherein the spacing between the substrate surface and the mounting surface is within the range of 10 nm to 5000 nm, more preferably 50 nm to 1000 nm.

4.  The method according to one or more of the preceding claims, further comprising the step of liquefying the film before and/or during exposition to a temperature gradient in step (c).

5.  The method according to one or more of the preceding claims, further comprising the step of solidifying the film after step (c).

6.  The method according to one or more of the preceding claims, wherein the film thickness is within the range of 10 nm to 1000 nm, more preferably 50 nm to 250 nm.

7.  The method according to one or more of the preceding claims, wherein the film contains an organic polymer or an organic oligomer.

8.  The method according to one or more of the preceding claims, wherein the Film to be patterned is of a single layer or includes a plurality of layers.

9.  The method according to one or more of the preceding claims, wherein the temperature gradient is spatially controlled.

10. The method according to one or more of the preceding claims, wherein the surface energy of one of the substrate surface and the mounting surface is spatially controlled.

11. The method according to one or more of the preceding claims, wherein the substrate surface and/or the mounting surface are moved relatively to each other for at least a fraction of time the film is exposed to the temperature gradient.

**12.** The method according to one or more of the preceding claims, wherein an electrical, magnetical, electromagnetical, mechanical and/or evaporational effect on the film is employed in order to support the patterning process.

**13.** An apparatus for producing a patterned film, the apparatus comprising a substrate having a substrate surface for supporting the film to be patterned and at least one mounting surface provided opposite to the substrate surface; a temperature gradient generator for generating a temperature gradient in a temperature gradient volume, the temperature gradient having a component orientated along a normal direction of the substrate surface, wherein

- the temperature gradient volume includes at least a volume portion extending from at least an area of the substrate surface in the normal direction thereof,
- the temperature gradient generator comprises at least first and second temperature control means, the first temperature control means being connected to the substrate, the second temperature control means being connected to the mounting surface, the temperature control means being spaced apart from each other, so that the substrate is operationally disposed at least partly therebetween and the temperature gradient volume is defined at least partly therebetween,
- the spacing between the substrate surface and the mounting surface is within the range of 10 nm to 5000 nm, and
- the first and second temperature control means are adapted to generate a temperature gradient between the substrate surface and the mounting surface provided opposite to the substrate surface within the range of $10^{6\circ}$C/m to $10^{10\circ}$C/m.

**14.** The apparatus according to claim 13, wherein the spacing between the substrate surface and the mounting surface is within the range of 50 nm to 1000 nm.

**15.** The apparatus according to anyone of claims 13 or 14, wherein the temperature gradient generator is adapted to generate at least partly homogenous and/or at least partly heterogeneous temperature gradients.

**16.** The apparatus according to anyone of claims 13 to 15, wherein at least one of the substrate surface and the mounting surface is patterned with topographic features and/or has a spatially varying surface energy and/or a spatially varying thermal conductivity.

**17.** The apparatus according to anyone of claims 13 to 16, wherein the substrate is a semiconductor wafer, in particular a silicon wafer.

**18.** The apparatus according to anyone of claims 13 to 17, wherein means for applying an electrical, magnetical, electromagnetical, mechanical and/or evaporational effects on the film are provided in order to support the patterning process.

**19.** Use of an apparatus according to claim 13 for producing a patterned film according to anyone of claims 1 to 12.

**Patentansprüche**

**1.** Verfahren zum Herstellen eines gemusterten bzw. strukturierten Films, umfassend die Schritte:

(a) Bereitstellen eines Substrats, das eine Substratoberfläche aufweist, um den zu bemusternden bzw. mit einem Muster zu versehenden Film zu unterstützen,

(b) Abscheiden von wenigstens einem Film, enthaltend ein thermisch leitfähiges Material auf der Film abstützenden Oberfläche, und

(c) Aussetzen dieses wenigstens einen Films wenigstens einem Temperaturgradienten in dem Bereich von $10^6$ °C/m bis $10^{10}$ °C/m in einer derartigen Weise, um Kräfte in dem Film zu generieren bzw. zu erzeugen, welche einen Massentransfer in dem Film bewirken, um dadurch ein dreidimensionales Muster in dem Film auszubilden.

**2.** Verfahren nach Anspruch 1, worin der Temperaturgradient erzeugt wird, indem die Substratoberfläche und wenigstens eine Montageoberfläche, die gegenüberliegend der Substratoberfläche vorgesehen wird, in thermischen Kontakt mit wenigstens ersten und zweiten Temperatursteuer- bzw. -regelmitteln gebracht werden, die auf unterschiedliche Temperaturen festgelegt bzw. eingestellt werden.

3.  Verfahren nach Anspruch 1 oder 2, worin der Abstand bzw. Zwischenraum zwischen der Substratoberfläche und der Montageoberfläche innerhalb des Bereichs von 10 nm bis 5000 nm, bevorzugter 50 nm bis 1000 nm liegt.

4.  Verfahren nach einem oder mehreren der vorhergehenden Ansprüche, weiters umfassend den Schritt eines Verflüssigens des Films vor und/oder während eines Aussetzens an einen Temperaturgradienten in Schritt (c).

5.  Verfahren nach einem oder mehreren der vorhergehenden Ansprüche, weiters umfassend den Schritt eines Verfestigens des Films nach Schritt (c).

6.  Verfahren nach einem oder mehreren der vorhergehenden Ansprüche, worin die Filmdicke innerhalb des Bereichs von 10 nm bis 1000 nm, bevorzugter 50 nm bis 250 nm liegt.

7.  Verfahren nach einem oder mehreren der vorhergehenden Ansprüche, worin der Film ein organisches Polymer oder ein organisches Oligomer enthält.

8.  Verfahren nach einem oder mehreren der vorhergehenden Ansprüche, worin der zu bemustemde Film aus einer Einzelschicht besteht oder eine Mehrzahl von Schichten umfaßt.

9.  Verfahren nach einem oder mehreren der vorhergehenden Ansprüche, worin der Temperaturgradient räumlich gesteuert bzw. geregelt wird.

10. Verfahren nach einem oder mehreren der vorhergehenden Ansprüche, worin die Oberflächenenergie von einer aus der Substratoberfläche und der Montageoberfläche räumlich gesteuert bzw. geregelt wird.

11. Verfahren nach einem oder mehreren der vorhergehenden Ansprüche, worin die Substratoberfläche und/oder die Montageoberfläche relativ zueinander für wenigstens einen Teil der Zeit, während welcher der Film dem Temperaturgradienten ausgesetzt wird, bewegt werden.

12. Verfahren nach einem oder mehreren der vorhergehenden Ansprüche, worin ein elektrischer, magnetischer, elektromagnetischer, mechanischer und/oder Verdampfungs-Effekt auf dem Film angewandt wird, um das Muster bildende Verfahren zu unterstützen.

13. Vorrichtung zum Herstellen eines gemusterten bzw. strukturierten Films, wobei die Vorrichtung umfaßt ein Substrat, welches eine Substratoberfläche, um den zu bemusternden bzw. mit einem Muster zu versehenden Film zu unterstützen, und wenigstens eine Montageoberfläche aufweist, die gegenüberliegend der Substratoberfläche vorgesehen ist;
einen Temperaturgradienten-Generator, um einen Temperaturgradienten in einem Temperaturgradientvolumen zu erzeugen, wobei der Temperaturgradient eine Komponente aufweist, die entlang einer normalen Richtung der Substratoberfläche ausgerichtet ist,
worin

-   das Volumen des Temperaturgradienten wenigstens einen Volumensbereich beinhaltet, der sich von wenigstens einer Fläche bzw. einem Gebiet der Substratoberfläche in der normalen Richtung derselben erstreckt,
-   der Generator bzw. die Erzeugungseinrichtung des Temperaturgradienten wenigstens erste und zweite Temperatursteuer- bzw. -regelmittel umfaßt, wobei die ersten Temperatursteuer- bzw. -regelmittel mit dem Substrat verbunden sind, die zweiten Temperatursteuer- bzw. -regelmittel mit der Montageoberfläche verbunden sind, die Temperatursteuer- bzw. -regelmittel voneinander beabstandet sind, so daß das Substrat operativ wenigstens teilweise dazwischen angeordnet ist, und das Volumen des Temperaturgradienten wenigstens teilweise dazwischen definiert ist,
-   der Abstand zwischen der Substratoberfläche und der Montageoberfläche innerhalb des Bereichs von 10 nm bis 5000 nm liegt, und
-   die ersten und zweiten Temperatursteuer- bzw. -regelmittel ausgelegt sind, um einen Temperaturgradienten zwischen der Substratoberfläche und der Montageoberfläche, die gegenüberliegend der Substratoberfläche zur Verfügung gestellt ist, innerhalb des Bereichs von $10^6$ °C/m bis $10^{10}$ °C/m zu erzeugen bzw. zu generieren.

14. Vorrichtung nach Anspruch 13, worin der Abstand zwischen der Substratoberfläche und der Montageoberfläche innerhalb des Bereichs von 50 nm bis 1000 nm liegt.

**15.** Vorrichtung nach einem der Ansprüche 13 oder 14, worin der Generator des Temperaturgradienten adaptiert ist, um wenigstens teilweise homogene und/oder wenigstens teilweise heterogene Temperaturgradienten zu generieren.

**16.** Vorrichtung nach einem der Ansprüche 13 bis 15, worin wenigstens eine aus der Substratoberfläche und der Montageoberfläche mit topographischen Merkmalen gemustert ist und/oder eine räumlich variierende Oberflächenenergie und/oder eine räumlich variierende thermische Leitfähigkeit aufweist.

**17.** Vorrichtung nach einem der Ansprüche 13 bis 16, worin das Substrat ein Halbleiterwafer, insbesondere ein Siliziumwafer ist.

**18.** Vorrichtung nach einem der Ansprüche 13 bis 17, worin Mittel zum Aufbringen bzw. Anwenden von elektrischen, magnetischen, elektromagnetischen, mechanischen und/oder Verdampfungs-Effekten auf dem Film zur Verfügung gestellt sind, um das Muster bildende Verfahren zu unterstützen.

**19.** Verwendung einer Vorrichtung nach Anspruch 13, um einen gemusterten Film nach einem der Ansprüche 1 bis 12 herzustellen.

**Revendications**

**1.** Procédé de production d'un film à motif, comportant les étapes consistant à :

(a) prévoir un substrat ayant une surface de substrat destinée à supporter le film auquel doit être conféré un motif,
(b) déposer au moins un film contenant une matière thermiquement conductrice sur la surface de support de film, et
(c) exposer ledit film au moins partiellement à un gradient de température situé dans la plage allant de $10^{6\circ}$C/m à $10^{10\circ}$C/m de manière à générer des forces dans le film entraînant un transfert de masse dans le film, afin de produire ainsi un motif tridimensionnel dans le film.

**2.** Procédé selon la revendication 1, dans lequel le gradient de température est généré en amenant la surface de substrat et au moins une surface de montage faisant face à la surface de substrat en contact thermique avec au moins des premiers et seconds moyens de commande de température réglés à des températures différentes.

**3.** Procédé selon la revendication 1 ou 2, dans lequel l'espacement entre la surface de substrat et la surface de montage est compris dans la plage allant de 10 nm à 5 000 nm, de manière plus préférée de 50 nm à 1 000 nm.

**4.** Procédé selon l'une au moins des revendications précédentes, comportant en outre l'étape consistant à liquéfier le film avant et/ou pendant l'exposition à un gradient de température dans l'étape (c).

**5.** Procédé selon l'une au moins des revendications précédentes, comportant en outre l'étape consistant à solidifier le film après l'étape (c).

**6.** Procédé selon l'une au moins des revendications précédentes, dans lequel l'épaisseur de film est comprise dans la plage allant de 10 nm à 1 000 nm, de manière plus préférée de 50 nm à 250 nm.

**7.** Procédé selon l'une au moins des revendications précédentes, dans lequel le film contient un polymère organique ou un oligomère organique.

**8.** Procédé selon l'une au moins des revendications précédentes, dans lequel le film auquel doit être conféré un motif est constitué d'une couche unique, ou comporte une pluralité de couches.

**9.** Procédé selon l'une au moins des revendications précédentes, dans lequel le gradient de température est commandé de manière spatiale.

**10.** Procédé selon l'une au moins des revendications précédentes, dans lequel l'énergie de surface de l'une parmi la surface de substrat et la surface de montage est commandée de manière spatiale.

**11.** Procédé selon l'une au moins des revendications précédentes, dans lequel la surface de substrat et/ou la surface de montage sont déplacées de manière relative l'une par rapport à l'autre pendant au moins une fraction du temps pendant lequel le film est exposé au gradient de température.

**12.** Procédé selon l'une au moins des revendications précédentes, dans lequel un effet électrique, magnétique, électromagnétique, mécanique et/ou d'évaporation sur le film est utilisé afin de mettre en oeuvre le procédé de formation de motif

**13.** Dispositif pour produire un film à motif, le dispositif comportant un substrat ayant une surface de substrat destinée à supporter le film auquel doit être conféré un motif, et au moins une surface de montage faisant face à la surface de substrat,

un générateur de gradient de température pour générer un gradient de température dans un volume à gradient de température, le gradient de température ayant une composante orientée le long d'une direction perpendiculaire à la surface de substrat,

dans lequel

- le volume à gradient de température comprend au moins une partie de volume s'étendant à partir d'au moins une zone de la surface de substrat dans la direction perpendiculaire à celle-ci,
- le générateur de gradient de température comprend au moins des premiers et seconds moyens de commande de température, les premiers moyens de commande de température étant connectés au substrat, les seconds moyens de commande de température étant connectés à la surface de montage, les moyens de commande de température étant espacés les uns des autres, de sorte que le substrat soit disposé de manière opérationnelle au moins partiellement entre ceux-ci et le volume à gradient de température soit défini au moins partiellement entre ceux-ci,
- l'espacement entre la surface de substrat et la surface de montage est compris dans la plage allant de 10 nm à 5 000 nm, et
- les premiers et seconds moyens de commande de température sont adaptés pour générer un gradient de température entre la surface de substrat et la surface de montage faisant face à la surface de substrat dans la plage allant de $10^{6\circ}$C/m à $10^{10\circ}$C/m.

**14.** Dispositif selon la revendication 13, dans lequel l'espacement entre la surface de substrat et la surface de montage est compris dans la plage allant de 50 nm à 1 000 nm.

**15.** Dispositif selon l'une quelconque des revendications 13 et 14, dans lequel le générateur de gradient de température est adapté pour générer des gradients de température au moins partiellement homogènes et/ou au moins partiellement hétérogènes.

**16.** Dispositif selon l'une quelconque des revendications 13 à 15, dans lequel au moins une surface parmi la surface de substrat et la surface de montage est amenée à recevoir un motif avec des caractéristiques topographiques et/ou a une énergie de surface variant de manière spatiale et/ou une conductivité thermique variant de manière spatiale.

**17.** Dispositif selon l'une quelconque des revendications 13 à 16, dans lequel le substrat est une plaquette de semi-conducteur, en particulier une plaquette de silicium.

**18.** Dispositif selon l'une quelconque des revendications 13 à 17, dans lequel des moyens pour appliquer des effets électriques, magnétiques, électromagnétiques, mécaniques et/ou d'évaporation sur le film sont prévus afin de mettre en oeuvre le procédé de formation de motif.

**19.** Utilisation d'un dispositif selon la revendication 13, pour produire un film à motif selon l'une quelconque des revendications 1 à 12.

Fig. 1

$T_2$

$T_1$

**Fig. 2a**

**Fig. 2b**

**Fig. 2c**

Fig. 3a

$T_2$

$T_1$

Fig. 3b

$T_2$

$T_1$

Fig. 3c

Fig. 4a

$T_2$

$T_1$

Fig. 4b

**Fig.5a**

**Fig.5b**

Fig. 6a

Fig. 6b

Fig. 6c

Fig. 7